# EUROPEAN PATENT APPLICATION

(11) **EP 4 783 060 A1**
(43) Date of publication of application: **29.07.2026**
(21) Application number: 25153895.5
(22) Date of filing: 24.01.2025
(51) Int. Cl.: G06F 30/27

(54) **METHOD AND SYSTEM FOR GENERATING SINGLE LINE DIAGRAM OF POWER SYSTEM**

(71) Applicant: Siemens Aktiengesellschaft, 80333 München (DE)
(72) Inventor: CHATRE, Sandip Govindrao, Bangalore Karnataka 560100 (IN); E, Navin, Hosur, Tamil Nadu 635109 (IN); SURYAKANT CHAPPE, Narsing, Latur, Maharashtra 413512 (IN); SAGAR, Phoenix, Osmanabad, Maharashtra 413606 (IN); SUBHASH RAUT, Akshay, Solapur, Maharashtra 413109 (IN)
(74) Representative: Patentanwaltskanzlei WILHELM & BECK

(57) **Abstract**

A system (200) and a method (100) for generating a single line diagram (SLD) of a power system. The method (100) includes receiving, by a processor (204), an input comprising specifications for generation of the SLD of the power system, in a power system design application. The method characterized by applying, by the processor (204), the input as a prompt engineering query to a model 210A and generating, by the processor (204), a system specification description (SSD) file by the model 210A based on the prompt engineering query. Further, the method includes determining, by the processor (204), the SSD file is compliant with at least one standard associated with the power system; generating, by the processor (204), the SLD based on the SSD file; and causing, by the processor (204), to display the SLD on a screen of the power system design tool.

## Description

The present disclosure relates generally to generating a single line diagram (SLD) of a power system, and more specifically to a method and system for generating a single line diagram (SLD) of the power system using a trained model based on prompt query provided by a user.

Electric power is produced at power generating stations which are located far away from load centers. High voltage transmission lines are used to transmit the electric power from the power generating stations to the load centers. A large number of transformations and switching stations are required from the power generating station for transmission of the electric power to target locations. These are known as substations. The substations form a link between the power generating stations, transmission systems and distribution systems. The substations include an assembly of electrical components which includes but is not limited to busbars, switchgear apparatus, power transformers etc. The substations receive power transmitted at high voltage from the generating stations and reduce voltage to a value suitable for distribution. Some substations provide facilities for switching operations of transmission lines and others are converting stations. The substations also include safety equipment to disconnect the electrical components or circuit at in case of any faults, etc.

The electrical components and connections between them are represented on a single line diagram (SLD), which is also called one-line diagram.

However, the process of designing and generating the SLD requires a dedicated engineering team with deep knowledge of the SLD designing process, will use power system design engineering tools for the same. A highly skilled engineering person will use these power system design engineering tools along with symbol libraries to design the SLD as per IEC61850 standard and substation automation- protection domain requirements. This is done manually and when the SLD needs to be generated for the entire substation, the process of designing and generating the SLD is a very cumbersome, resource intensive and time-consuming process. Further, there are instances where the SLD is required for only a portion of the substation and the SLD for a similar use case may have already been generated. However, in case the engineering person is not aware of the availability of the similar SLD, the engineering person will repeat all the process of generating the SLD from scratch, leading to loss of man-hours and resources.

In yet another instance, if there are errors in the generated SLD or a customer request for modifications to the generated SLD, then the process of accommodating the changes in the SLD also is time-consuming. Further, there is no automatic mechanism of checking for compliance with power system engineering related standards such as for example but not limited to IEC 61850 or using historical SLDs generated to optimize the process of generation and validation of the SLDs. Also, the process of designing the SLD requires skilled engineering persons who have the knowledge of the specifications of the substation as well as aware of the SLD generation process and the standards the SLD needs to follow.

In light of the above, there remains a need to automate the process of generation of the SLD such that the engineering person with basic SLD knowledge would give the specifications of the substation in natural language (Example: English) to the power system design engineering tools and the SLD is automatically generated as per natural language inputs. This would ensure that the overall SLD development can be faster, accurate and more efficient.

The above-mentioned challenges are addressed by the proposed solution by using a generative artificial intelligence model to automate the process of generation of the SLD based on natural language inputs provided by a user to a power system design engineering tool. The model is integrated into the power system design engineering tool as a secure and private instance, this not only secures the training data but also ensures that the generated SLD which is used for relearning of the model is also secured. Further, the model uses the natural language inputs as prompt query to generate the SLD. Also, the model is trained with historic SLD data and standards related to the power system engineering. As a result, the user will only have to provide the specification requirements for generating the SLD in the natural language and, the generation, validation, error identification, compliance with standards, recommendation, etc are all automatically provided by the power system design engineering tool which has the model integrated as a private and secure instance. This makes the process of SLD generation easier, faster and an efficient manner.

Throughout the present disclosure, the term "SLD" as herein refers to a symbolic or graphical representation of the substation, which includes lines and symbols to show the connections and nodes of the substation, so that the SLD can be read and understood easily. For example, red boxes represent circuit breakers, grey lines represent three-phase bus and interconnecting conductors, and orange circles represent electric generators. The SLD can represent the substation in entirety or just portion of the substation. The SLDs are used for planning a substation layout, maintenance, operations, and engineering studies.

Throughout the present disclosure, the term "system specification description (SSD) file" as used herein refers to a type of System Configuration Language (SCL) file that describes the specification of a substation automation system as per standard IEC 61850. The SSD file describes the topology of the electrical system to automate and the required functions (logical nodes) without including the specific lED models that implement these functions. This will have Substation part, Data type templates and logical node type definitions but need not have lED section. It can also include voltage levels, primary equipment, and required logical nodes, the substation part, data type templates, and logical node type, etc.

Through the present disclosure, the term "prompt engineering query" refers to textual input provided to the model to generate responses or perform specific tasks. The prompt engineering queries consist of one or more sentences or passages of text that serve as input to the model. This input can include questions, statements, commands, or any other form of textual communication. The prompt engineering query conveys the intent of the input to the model. In general, prompt engineering query may include contextual information relevant to the desired task or response. This could include background information, constraints, preferences, or other contextual cues that help guide the response of the model. In some examples, the prompt engineering query follow a specific format or structure depending on the requirements of the task or application. This could involve using certain keywords, phrases, or formatting conventions to convey instructions or constraints to the model. In some cases, the prompt engineering query may include examples or samples of the desired output to provide additional context or guidance to the model. This aids to clarify the user's expectations and improve the quality of the generated responses. In the context of the model, the prompt engineering query refers to cues or instructions for the model to produce desired outputs based on the input provided, for example, the natural language query. Advantageously, the prompt engineering query are generated for accurately querying the model.

Through the present disclosure, the term "generative artificial intelligence model" refers to a type of artificial intelligence model designed to understand the specification requirements and generate corresponding output i.e., a single line diagram, based on vast amounts of training data. These models are built using deep learning architectures, particularly transformer-based architectures. The generative artificial intelligence models are trained on massive datasets containing billions or words and SLDs from diverse sources such as books, articles, websites, and other textual content. The large-scale training enables the model to learn complex patterns, structures, and nuances of the SLD.

The object of the present disclosure is achieved by a computer-implemented method for generating a single line diagram (SLD) of a power system. The method includes receiving, by a processor, an input comprising specifications for generation of the SLD of the power system, in a power system design application. The method is characterized by applying, by the processor, the input as a prompt engineering query to a model and generating, by the processor, a system specification description (SSD) file by the model based on the prompt engineering query. The method also includes determining, by the processor, the SSD file is compliant with at least one standard associated with the power system; generating, by the processor, the SLD based on the SSD file; and causing, by the processor, to display the SLD on a screen of the power system design tool.

In one or more embodiments, the model is a generative artificial intelligence model.

In one or more embodiments, the model is integrated with the power system design tool as a private and secure instance.

In one or more embodiments, the input is a natural language input.

In one or more embodiments, the at least one standard associated with the power system is user defined.

In one or more embodiments, determining, by the processor, the SSD file is compliant with the at least one standard associated with the power system includes comparing, by the processor, the specifications for generation of the SLD in the SSD file to the at least one standard associated with the power system and validating, by the processor, the SSD file with the at least one standard associated with the power system based on the comparison. Further, the method includes modifying, by the processor, the SSD file according to the at least one standard associated with the power system to make the SSD file compliant with the at least one standard associated with the power system.

In one or more embodiments, the SSD file comprises the specifications of a plurality of components and attributes for the generation of the SLD.

In one or more embodiments, the method further includes training, by the processor, the model using the generated SLD based on a reinforcement learning technique.

In one or more embodiments, the model is trained using the at least one standard associated with the power system, historical SLDs and corresponding SSD files.

In one or more embodiments, the method further includes receiving, by the processor, modification input to modify a portion of the generated SLD; and recommending, by the processor, the modified portions of the SLD to be replaced in the already generated SLD, by the model based on the historical SLDs.

The object of the present disclosure is also achieved by a system for generating a single line diagram (SLD) of a power system. The system includes an application interface of a power system design application, a processor, and a memory. The memory is coupled to the processor, wherein the memory comprises a library of logic instruction blocks and instructions which, when executed by the processor, configures the processor to receive an input comprising specifications for generation of the SLD of the power system, in the power system design application. Further, the processor is characterized to apply the input as a prompt engineering query to a model and generate a system specification description (SSD) file by the model based on the prompt engineering query. Further, the processor is configured to determine the SSD file is compliant with at least one standard associated with the power system; generate the SLD based on the SSD file; and cause to display the SLD on a screen of the power system design tool.

The object of the present disclosure is further achieved by a computer program code which, when executed by a processor, causes the processor to carry out steps of the aforementioned method.

The object of the present disclosure is further achieved by a computer program product comprising computer program code which, when executed by a processor, causes the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a flowchart representation of a computer-implemented method for generating a SLD of a power system, in accordance with one or more embodiments of the present disclosure;
- FIG 2: is a block diagram representation of a system for generating the SLD of the power system, in accordance with one or more embodiments of the present disclosure; and
- FIG 3: is an exemplary flow of the method for generating the SLD of the power system, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for generating the SLD of the power system are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details or with an equivalent arrangement. In other instances, well-known structures and devices are shown in block diagram form in order to avoid unnecessarily obscuring the embodiments of the disclosure.

Conventional methods include manually generating the SLDs by engineering teams or highly skilled engineers in system specific language. As a result, the engineer needs to be well aware of the system specific language and when the SLDs are complex then the entire process of generation of the input by providing inputs in the system specific language, is a time consuming and cumbersome process. Further, there may be instances where the SLD generated by some power engineering design tool may not be compliant with the standards such as for example but not limited to, IEC 61850. Unlike the conventional methods and systems, the proposed solution automatically generates the SLD based on natural language input provided by the user using a trained model. Further, the model is also trained with standards associated with power system engineering domain and hence the model also checks for the compliance of the SLD with respect to the said standards. As a result, the proposed solution is a comprehensive process which ensures high quality, standard compliant SLDs are generated in a timely manner with high efficiency and accuracy.

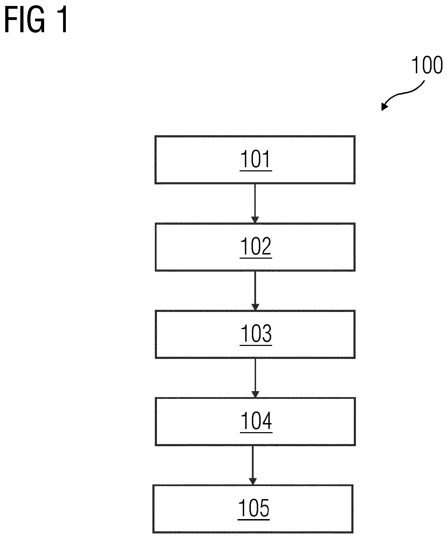

Referring now to FIG 1, illustrated is a flowchart of a method (as represented by reference numeral 100) for generating the SLD of the power system, in accordance with an embodiment of the present disclosure. As used herein, generating the SLD of the power system refers to automatically generating the SLD based on natural language input specifying the requirements for the SLD, provided by a user. For example, the natural language input can be provided in German language. A trained model uses the natural language input as a prompt query and generates the SLD which is compliant with known standards of the power system engineering domain. The user can also validate the SLD which is automatically generated by the system. This approach aims to enhance the efficiency of generating, validating and modification of complex SLDs, thereby also enhancing the ease of generation of the SLDs for any user. This approach also reduces the time required for generating the SLDs especially when the SLDs have to be generated for the entire substation.

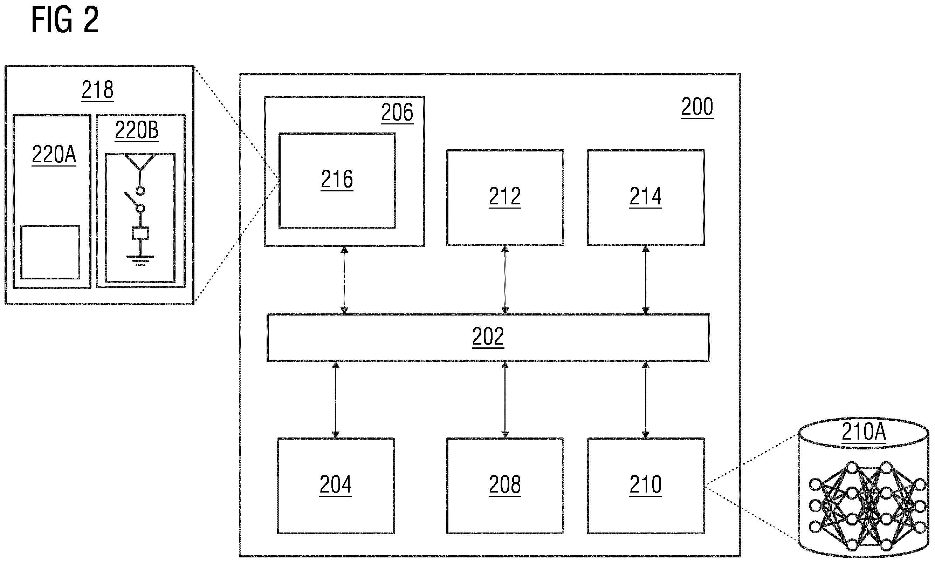

Referring to FIG 2, illustrated is a block diagram of a system 200 for generating the single line diagram (SLD) of the power system, in accordance with one or more embodiments of the present disclosure. It will be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection. The communication interfaces may also include industrial ethernet, Institute of Electrical and Electronic Engineers (IEEE) 802.3 (ENET), IEEE 802.11 (WIFI), Bluetooth, Time Division Multiplex (TDM), Data Over Cable System Interface Specification (DOCSIS), Internet Protocol (IP), General Packet Radio Service Transfer Protocol (GTP), etc.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 may be designed using relational or non-relational database management systems, depending on the specific requirements and preferences of the system 200. The database 210 is operationally coupled to a model 210A configured to automatically generate the SLD. In an embodiment the model 210A is a generative artificial intelligence (generative Al) model 210A. The model 210A can be for example but not limited to, hosted in a cloud server.

The generative AI model 210A comprises various stages including but not limited to a prompt optimizer 222, a pretrained model 224, a supervised learning fine-tuned model 226 and a reinforcement learning model 228. The data set used to train the model 210A at each of the stages are different with different outcomes expected out of each stage. The generative AI model 210A can be for example but not limited to a Generative Adversarial Networks (GANs), Variational Autoencoders (VAEs) or Transformer-Based Models. The GAN is trained to create visual and multimedia artifacts from both imagery and textual input data. In case of the VAEs, the input data is encoded into a latent space and then decoded to generate new data and are used in tasks like anomaly detection. The transformer-based models use attention mechanisms to generate coherent and contextually accurate data (e.g., GPT-4). The transformer-based models comprise technologies such as Generative Pre-Trained (GPT) language models that can translate and use information gathered to create textual content.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display. It is to be understood that, when reference is made in the present disclosure to the term "display" this refers generically either to a display screen on its own or to a screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein. In particular, the memory 206 includes a module arrangement 216 to perform steps for automatically generating the SLDs. Also, in the system 200, the memory 206 may be configured to store the data associated with or generated by the execution of the inventive steps.

In the present system 200, a user interface 218 is the UI of a power system design application to generate the SLDs. The UI 218 is a screen with which the user can interact and provide the inputs for generating the SLD. The UI 218 includes a display, keyboard, touchscreen, tablet, and the like. The UI 218 displays a Guided User Interface (GUI) that includes two portions i.e., a prompt window 220A and an SLD editor 220B. The prompt window 220A where the user can provide the natural language inputs, which will be used by the system 200 as prompt queries for generating the SLDs. The prompt window 220A is for example a chatbot or chat mechanism which is integrated directly into the power system design application or as a module. This allows the users to input the required information for SLD design in natural language, such as English. The SLD editor 220B allows a user to interact with the application(s) hosted by the system 200 to generate the SLDs. The user may interact with the GUI via the UI 218 to generate the SLDs. For example, a user may provide natural language inputs which are used as prompts, select, drag-and-drop, or perform some type of action via UI 218 and the GUI to generate and modify the generated SLD. Further, a secure private instance of the model 210A is integrated into the prompt window 220A of the power system design application.

Referring to FIGS 1 and 2 in combination, the various steps of the method 100 as described hereinafter may be executed in the system 200, or specifically in the processor 204 of the system 200, for - generating the SLD of the power system. For purposes of the present disclosure, generating the SLD of the power system in the present method 100 is embodied as an optimization algorithm for generating the SLD of the power system. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes receiving an input including specifications for the generation of the SLD of the power system, in the power system design application. The power system can be for example an entire substation, a portion of the substation or an electrical component. The electrical equipment can be for example but not limited to circuit breakers, transformers, capacitors, bus bars, and conductors, etc. The SLD may be generated at various stages which includes a conceptualization stage, a preliminary stage, design stage, construction stage, As-Built stage, maintenance stage, safety and operations stage, and specialized stage. The specification for generation of the SLD of the power system also depends on the stage at which the SLD is being generated. In general, the specification may include for example but not limited to a layout information, data of the electrical components to be included such as protective devices, cables, panels, load, etc., electrical network of a facility or substation, safety features and interlocks, connection between the electrical components, etc. The specification is received by the power system design application which is used to generate the SLD. The power system design application can be any existing application which is used to generate the SLD. The input which includes the specification is provided by the user to the power system design application in natural language into the prompt window 220A. The prompt window 220A can be for example integrated into the power system design application or may be provided as a pop-up from the power system design application. Here, the natural language can be for example but not limited to English, German, etc. For example, the input in natural language can be a query "Draw single line diagram for Double bus bar differential potential scheme."

In embodiments of the present disclosure, at step 102, the method 100 includes applying the input as a prompt engineering query to the model 21 0A. The natural language input is received by the model 210A as the prompt engineering query (also called a prompt query). In an embodiment the model 210A is a generative artificial intelligence model 210A (genAl model 21 0A). Also, it should be noted that the terms model 210A, generative artificial intelligence model 210A and the term genAl model 210A are used interchangeably throughout the specification and does restrict the scope of the proposed solution. The prompt query is a textual input provided to the genAl model 210A to generate responses or perform specific tasks. The prompt engineering queries consist of one or more sentences or passages of text that serve as input to the genAl model 210A. This input can include questions, statements, commands, or any other form of textual communication. The prompt engineering query conveys the intent of the input to the model. In general, prompt engineering query may include contextual information relevant to the desired task or response. This could include background information, constraints, preferences, or other contextual cues that help guide the response of the model. In some examples, the prompt engineering query follow a specific format or structure depending on the requirements of the task or application. This could involve using certain keywords, phrases, or formatting conventions to convey instructions or constraints to the model. In some cases, the prompt engineering query may include examples or samples of the desired output to provide additional context or guidance to the model. This aids to clarify the user's expectations and improve the quality of the generated responses. In the context of the model, the prompt engineering query refers to cues or instructions for the model to produce desired outputs based on the input provided, for example, the natural language query. Advantageously, the prompt engineering query are generated for accurately querying the model or it sets the context and frames the task that the genAl model 210A should execute. Further, the genAl model 210A is integrated with the power system design tool as a private and secure instance. Therefore, the said genAl model 210A ensures safety of the training data as well as the input and output data i.e., the SLD.

In embodiments of the present disclosure, at step 103, the method 100 includes generating a system specification description (SSD) file by the genAl model 210A based on the prompt engineering query. The SSD file is a type of System Configuration Language (SCL) file that describes the specification of a substation automation system as per standard IEC 61850. The SSD file describes the topology of the electrical system to automate and the required functions (logical nodes) without including the specific lED models that implement these functions. This will have Substation part, Data type templates and logical node type definitions but need not have lED section. It can also include voltage levels, primary equipment, and required logical nodes, the substation part, data type templates, and logical node type, etc. The genAl model 210A is trained with historical combinations of the SLD requirements, IEC 61850 compliant SLDs and the corresponding SSD files. Hence the model 210A is able to take the input of the prompt provided in natural languages and intelligently generate the SSD files based on a supervised learning performed on the historical data.

In embodiments of the present disclosure, at step 104, the method includes determining the SSD file is compliant with at least one standard associated with the power system. When the user manually generates the SSD files then they are compliant with the IEC standard 61850. As the proposed solution automatically generates the SLD, it is necessary to ensure that it is compliant with the various IEC standards. These IEC standards or any American National Standards Institute (ANSI) standards help ensure that the SLDs are created in a standardized and coherent manner, facilitating effective communication, and understanding among professionals in the field of electrical engineering. Further, the model 210A can be trained with these multiple standard documentations which includes the below:
1. IEC 61082-1: This standard provides general rules for preparing documentation used in electrotechnology. It includes guidelines for symbols, graphical symbols, and the SLD.
2. IEC 60617: This series of standards specifies graphical symbols for use in electrotechnical diagrams, including the SLD. It provides a standardized way to represent various electrical components and functions.
3. IEC 61082-2: This standard focuses specifically on the representation of connections and lists in the SLD and provides guidelines for their use.
4. IEC 60848: This standard defines the graphical symbols for electrical diagrams in the field of telecommunications, including information applicable to the preparation of the single-line diagrams for communication systems.
5. IEC 617: This series of standards covers the connection diagrams and terminal markings for industrial-process measurement and control equipment.
6. IEC 61346: This standard defines the structure for reference designations of objects in electrical and electronic engineering. It helps in assigning unique labels to components in the SLD.

The proposed solution includes the model 210A comparing the specifications for generation of the SLD in the SSD file to the standards associated with the power system and validating the SSD file with the standard associated with the power system based on the comparison. If the system 200 determines that the SSD file is not compliant with the standards then the system 200 automatically modifies the SSD file according to the standard associated with the power system to make the SSD file compliant with the standard associated with the power system. Therefore, the proposed solution not only generates the SLD but also ensures that the SLD generated in compliant with the various standards such as the IEC standards, ensuring compliance and compatibility with various SLD editing tools.

In embodiments of the present disclosure, at step 105, the method includes generating the SLD based on the SSD file and causing to display the SLD on a screen of the power system design tool. The SLD is generated based on the SSD file and the generated SLD is displayed on the SLD editor 220B. The SSD file also includes the SLD which is generated based on the natural language input provided by the user. The generated SLD is then displayed on the screen of the system 200 on the SLD editor 220B. The user is further allowed to provide modification input to modify a portion of the generated SLD. The modification input can also be provided in the natural language. For example, the natural language modification input is, "modify connection between first feeder and first circuit breaker in the double bus bar differential potential scheme." Then the model 210A will specifically modify the portion which is mentioned in the modification input only. Further, the model 210A also recommends the possible modifications based on the modified input or portions of the SLD which can be replaced in the already generated SLD, based on the historical SLDs and the modification input. However, the user is free to override the recommendation and opt for specific modifications only. The system 200 then receives the user preferred modification and then updates the SSD file. Further, the modified SLD is displayed based on the updated SSD file. Here, the validation of the updated SSD file is automatically checked with the standards associated with the power system before generating the SLD.

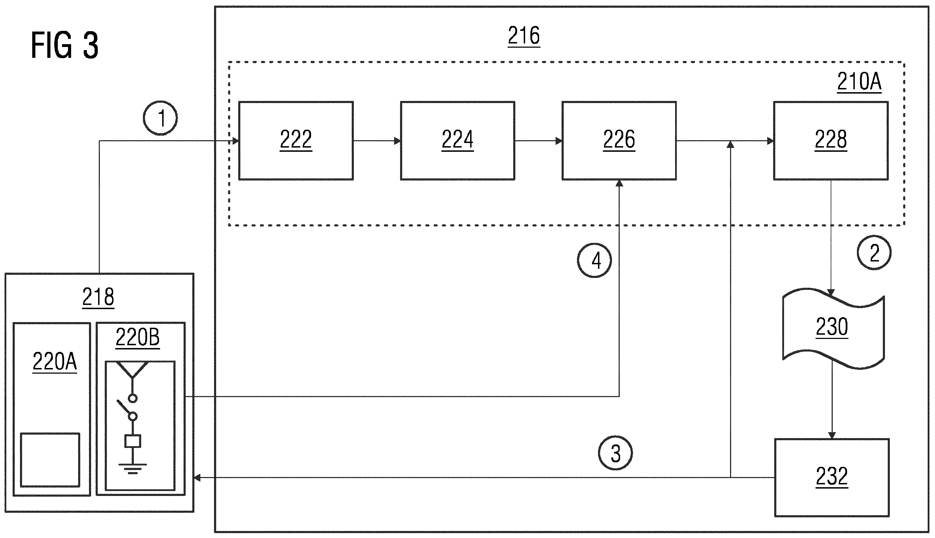

FIG 3 is an exemplary flow of the method for generating the SLD of the power system, in accordance with one or more embodiments of the present disclosure. Consider that a user wants to generate the SLD for a Double Busbar arrangement or a 1.5 circuit breaker for a protection device.

At step 1, the user provides the input in natural language in the prompt window 220A of the power system design application, and the input is considered as a prompt query. The prompt query can be a single statement such as "Draw a SLD for Double Busbar arrangement" or "Draw a SLD for Double Busbar arrangement which is compliant with IEC 61850", etc. Further, the user can provide specific details in the prompts, which are to be incorporated in the SLD such as for example, "Include the DC scheme in the Double Busbar arrangement" or "Generate the SLD for the Double Busbar arrangement with high impedance differential relay," etc. Also, other details such as details about the power source, load, and other components involved can also be provided in natural language as the prompt query.

The model 210A comprises a prompt optimizer 222, a pretrained model 224, a supervised learning fine-tuned model 226 and a reinforcement learning model 228. The prompt query is then provided to the prompt optimizer 222 which is trained to optimize and accurately use the prompts provided in the natural language and ensure relevant responses. The optimized prompt is then sent to the pretrained model 224 which parses the prompt and extracts the specification related information from the prompts which are required for the generation of the SLD. The pretrained model 224 is trained using multiple prompts and the corresponding specifications associated with the prompts along with a massive dataset of text and code. For this purpose, the historic data is used for training the pretrained model 224.

Further, the supervised learning fine-tuned model 226 uses supervised learning where the model 210A is trained on historic data from historical projects which are saved in the power system design application in the form of IEC 68150 compliant combination of the SLDs and the SSD Code for the corresponding prompt queries. Hence the model 210A is able to intelligently generate the SSD files based on the learning. The supervised learning is a type of machine learning technique used to train models, where the model 210A is provided with labeled training data and learns to map the input data to the corresponding output or target labels. The supervised learning algorithms that could be used can be for example but are not limited to linear regression, logistic regression, decision trees, support vector machines, and neural networks.

The supervised learning algorithm iteratively adjusts internal parameters (e.g., weights, biases) of the model 210A to minimize the difference between the predictions and the true labels in the training data of the model 210A. This process is called model training or optimization, and it continues until the model achieves a satisfactory level of performance on the training data. The model 210A also includes the reinforcement learning model 228 which takes inputs from the supervised learning fine-tuned model 226 and a schema validator 232 to generate the final IEC68150 compliant SSD xml code (step 2). The reinforcement learning model 228 refines the model 210A further through feedback loops, ensuring more accurate and optimized results. The SSD file is formatted according to the IEC 68150 standard to include the necessary components and attributes for the Single Line Diagram (SLD) based on the user mentioned scheme.

At step 3, the schema validator 232 checks the SSD file/code generated by the model 210A to ensure that the SSD file is in compliance with the IEC 68150 standard SSD schema and automatically corrects any errors. Further, the IEC68150 SSD file is imported into the SLD editor 220B of the power system design application to visualize the SLD. After import of the IEC68150 SSD file, the user can see the single line diagram in the SLD editor 220B. The SLD editor reads and interprets the SSD file, mapping the circuit breaker, 7SA87 device, and other related components. The SLD editor 220B displays the SLD and shows the 1.5 circuit breaker configuration for 7SA87 device, and the associated transformers and devices. Further, after reviewing the SLD the user can save the design for future use. The user may also export the SLD for documentation or further modifications. The saved projects are exported to the model 210A for increasing the accuracy. At step 4, the generated SLD is fed back to the supervised learning fine-tuned model 226 for learning of the model 210A.

The conventional methods and systems, do not include automatic generation of the SLD. Also, processing inputs from the engineering person in natural language to draw SLD is not possible. Therefore, the engineering persons need to have knowledge of the power system design application and the SLD design knowledge. Further, the SLD generation process using conventional methods is a time consuming and cumbersome process, especially for complex circuits.

In the proposed solution, the SLD can be generated automatically after importing diagram XML file generated by the model 210A. The engineering person can give the SLD inputs in natural language using chat window or chatbot. Further, there is less dependency on the SLD editor tools. As a result, up to 80% of engineering time for SLD design can be saved.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

### Reference Numerals

| | |
|---|---|
| method | 100 |
| step | 101 |
| step | 102 |
| step | 103 |
| step | 104 |
| step | 105 |
| system | 200 |
| bus | 202 |
| processor | 204 |
| memory | 206 |
| interface | 208 |
| database | 210 |
| model | 210A |
| input device | 212 |
| output device | 214 |
| module arrangement | 216 |
| UI | 218 |
| prompt window | 220A |
| SLD editor | 220B |
| prompt optimizer | 222 |
| pretrained model | 224 |
| supervised learning fine-tuned model | 226 |
| reinforcement learning model | 228 |
| schema validator | 232 |

## Claims

1. A computer-implemented method (100) for generating a single line diagram (SLD) of a power system, the method (100) comprising:
receiving, by a processor (204), an input comprising specifications for generation of the SLD of the power system, in a power system design application;
**characterized by:**
applying, by the processor (204), the input as a prompt engineering query to a model 210A;
generating, by the processor (204), a system specification description (SSD) file by the model 210A based on the prompt engineering query;
determining, by the processor (204), the generated SSD file is compliant with at least one standard associated with the power system;
generating, by the processor (204), the SLD based on the SSD file if the SSD file is compliant with the at least one standard associated with the power system; and
causing, by the processor (204), to display the SLD on a screen of the power system design tool.

2. The method (100) according to claim 1, wherein the model 210A is a generative artificial intelligence model 210A.

3. The method (100) according to claims 1-2, wherein the model 210A is integrated with the power system design tool as a private and secure instance.

4. The method (100) according to claim 1, wherein the input is a natural language input.

5. The method (100) according to claim 1, wherein the at least one standard associated with the power system is user defined.

6. The method (100) according to claim 1, wherein determining, by the processor (204), the SSD file is compliant with the at least one standard associated with the power system comprises:
comparing, by the processor (204), the specifications for generation of the SLD in the SSD file to the at least one standard associated with the power system;
validating, by the processor (204), the SSD file with the at least one standard associated with the power system based on the comparison; and
modifying, by the processor (204), the SSD file according to the at least one standard associated with the power system to make the SSD file compliant with the at least one standard associated with the power system.

7. The method (100) according to claim 1, wherein the SSD file comprises the specifications of a plurality of components and attributes for the generation of the SLD.

8. The method (100) according to claim 1, further comprising:
training, by the processor (204), the model 210A using the generated SLD based on a reinforcement learning technique.

9. The method (100) according to claim 1, wherein the model 210A is trained using the at least one standard associated with the power system, historical SLDs and corresponding SSD files.

10. The method (100) according to claim 1, further comprising:
receiving, by the processor (204), modification input to modify a portion of the generated SLD; and
recommending, by the processor (204), the modified portions of the SLD to be replaced in the generated SLD, by the model 210A based on the historical SLDs.

11. A system (200) for generating a single line diagram (SLD) of a power system, the system (200) comprising:
an application interface (218) of a power system design application;
a processor (204); and
a memory (206) coupled to the processor (204), wherein the memory (206) comprises a library of logic instruction blocks and instructions which, when executed by the processor (204), configures the processor (204) to:
receive an input comprising specifications for generation of the SLD of the power system, in the power system design application;
**characterized by:**
apply the input as a prompt engineering query to a model 210A;
generate a system specification description (SSD) file by the model 210A based on the prompt engineering query;
determine the SSD file is compliant with at least one standard associated with the power system;
generate the SLD based on the SSD file if the SSD file is compliant with at least one standard associated with the power system; and
cause to display the SLD on a screen of the power system design tool.

12. A computer program product, comprising computer program code which, when executed by a processor (204), cause the processor (204) to carry out the method (100) of one of the claims 1 to 10.

13. A computer-readable medium comprising a computer program product comprising computer program code which, when executed by a processor (204), cause the processor (204) to carry out the method (100) of one of the claims 1 to 10.
